(19) Europäisches Patentamt
European Patent Office
Office européen des brevets

(11) **EP 1 220 101 B1**

(12) **FASCICULE DE BREVET EUROPEEN**

(45) Date de publication et mention
de la délivrance du brevet:
**30.05.2007 Bulletin 2007/22**

(51) Int Cl.:
***G06F 12/14*** *(2006.01)*

(21) Numéro de dépôt: **01126122.9**

(22) Date de dépôt: **03.11.2001**

(54) **Procédé et dispositif de protection contre le piratage de circuits intégrés**

Verfahren und Vorrichtung zum Schutz gegen unbefugte Benutzung eines integrierten Schaltkreises

Method and device for protecting against unauthorised use of integrated circuits

(84) Etats contractants désignés:
**DE FR GB IT**

(30) Priorité: **28.12.2000 FR 0017261**

(43) Date de publication de la demande:
**03.07.2002 Bulletin 2002/27**

(73) Titulaire: **STMicroelectronics SA**
**F-92120 Montrouge (FR)**

(72) Inventeurs:
• **Marinet, Fabrice**
**13790 Chateauneuf Le Rouge (FR)**
• **Wuidart, Sylvie**
**83910 Pourrieres (FR)**

(74) Mandataire: **Marchand, André**
**OMNIPAT,**
**24 Place des Martyrs de la Résistance**
**13100 Aix-en-Provence (FR)**

(56) Documents cités:
**EP-A- 1 022 683      WO-A-00/42484**

**Description**

La présente invention concerne un procédé de protection d'un circuit intégré contre le piratage, au moins lors de l'exécution par le circuit d'opérations impliquant la lecture de données confidentielles stockées dans le circuit intégré.

La présente invention concerne également un circuit intégré comprenant au moins une mémoire dans laquelle sont stockées des données confidentielles, des moyens de calcul aptes à lire les données confidentielles stockées dans la mémoire, et un dispositif de protection contre le piratage de ces données confidentielles.

De façon classique, les transactions électroniques faites sur un terminal au moyen d'une carte à puce sont sécurisées grâce à une procédure d'authentification de la carte faisant intervenir un algorithme de cryptographie. Au cours d'une telle procédure d'authentification, le terminal envoie à la carte un code aléatoire, et la carte à puce doit répondre en produisant un code d'authentification qui est la transformée du code aléatoire par l'algorithme de cryptographie. Le terminal calcule de son côté la transformée du code aléatoire et compare le résultat obtenu avec celui renvoyé par la carte. Si le code d'authentification renvoyé par la carte est valable, la transaction est autorisée.

Dans le circuit intégré d'une carte à puce, l'algorithme de cryptographie est généralement exécuté par un circuit à logique câblée, ou co-processeur de cryptographie, auquel est attribué une clé secrète ou clé de cryptographie, qui est stockée dans une zone protégée de la mémoire du circuit intégré. Il est donc essentiel de garantir une protection absolue de cette clé secrète car les algorithmes de cryptographie mis en oeuvre dans les procédures d'authentification sont en soi connus et seule la clé secrète garantit l'inviolabilité de la procédure d'authentification.

Or ces dernières années, les techniques de piratage des circuits intégrés ont considérablement évolué et mettent aujourd'hui en oeuvre des méthodes d'analyse sophistiquées basées sur une observation du courant consommé par les éléments du circuit intégré lors de l'exécution d'opérations confidentielles. Il existe à ce jour deux types de méthodes d'analyse du courant consommé, à savoir les méthodes d'analyse de type SPA (Single Power Analysis) et les méthodes d'analyse de type DPA (Differential Power Analysis). Les méthodes d'analyse du type DPA, plus efficaces que les méthodes du premier type, permettent de découvrir une clé secrète par la seule observation des variations de courant consommé par le circuit de cryptographie, sans qu'il soit nécessaire de lire les données circulant sur le bus interne du circuit intégré et d'identifier les mémoires lues. Une telle méthode repose sur une corrélation d'échantillons de courant consommé avec un modèle mathématique du circuit de cryptographie et d'hypothèses sur la valeur de la clé secrète. La corrélation permet de supprimer la partie continue du courant consommé et de mettre en évidence des pics de consommation qui sont révélateurs des opérations effectuées par le circuit de cryptographie et de la valeur des données confidentielles. Avec une telle méthode, il suffit ainsi d'acquérir environ 1000 échantillons pour obtenir une clé secrète de type DES.

Pour contrer ces méthodes de piratage, on a prévu d'appliquer diverses méthodes de contre-mesure permettant de masquer ou brouiller les variations de la consommation électrique, au moins pendant l'exécution d'opérations confidentielles. De telles contre-mesures permettent uniquement d'augmenter le nombre d'échantillons nécessaires jusqu'à 200 000, nombre qu'il est toujours possible d'obtenir moyennant une automatisation les mesures. Le brevet EP 1022683 décrit ainsi une méthode consistant à déconnecter la source d'alimentation d'un appareil de chiffrement lorsque des opérations confidentielles sont exécutées.

Dans ce contexte, la présente invention a pour but d'offrir une protection supplémentaire aux circuits intégrés conçus pour manipuler des informations confidentielles, notamment ceux équipant les cartes à puce.

Cet objectif est atteint par la prévision d'un procédé pour la protection d'un circuit intégré contre le piratage, caractérisé en ce qu'il comprend les étapes exécutées par le circuit intégré avant une séquence prédéterminée de traitements, consistant successivement à :

- détecter l'état d'au moins une temporisation,
- commander le déclenchement de la temporisation se celle-ci n'est pas active, et
- se bloquer si la temporisation est active.

Selon une particularité de l'invention, ce procédé comprend en outre une étape exécutée par le circuit intégré si la séquence de traitements prédéterminés a été exécutée normalement, consistant à désactiver la temporisation.

Selon une autre particularité de l'invention, ce procédé comprend en outre une étape exécutée par le circuit intégré si la temporisation est détectée active, consistant à modifier la valeur d'un compteur dans une zone protégée d'une mémoire non volatile, comparer la valeur de ce compteur à un seuil prédéfini, et effectuer un traitement de protection de données confidentielles stockées dans des mémoires du circuit intégré si la valeur du compteur atteint le seuil prédéfini.

Avantageusement, ledit traitement de protection consiste à effacer les données confidentielles des mémoires du circuit intégré.

Plus précisément, ledit traitement de protection consiste à effacer un code secret stocké dans une mémoire du circuit intégré.

Alternativement, ledit traitement de protection consiste à effacer toutes mémoires du circuit intégré.

Avant d'exécuter un calcul d'une séquence d'un nombre prédéfini de calculs, le circuit intégré détecte de préférence l'état d'une temporisation respective, chaque calcul étant associé respectivement à une temporisation, il commande l'activation de la temporisation associée si celle-ci n'est pas active, et il se bloque si la temporisation associée est active.

L'invention concerne également un circuit intégré protégé contre le piratage, caractérisé en ce qu'il comprend au moins un circuit de temporisation comprenant des moyens d'activation d'une temporisation conçue pour rester à l'état actif tant que le circuit est sous tension et pendant une durée prédéterminée si le circuit est hors tension, des moyens d'inactivation de la temporisation, et des moyens pour détecter l'état actif ou inactif de la temporisation ; le circuit intégré comprenant en outre des moyens pour lire l'état de la temporisation, et pour se bloquer à des instants prédéfinis si la temporisation est à l'état actif.

Selon une particularité de l'invention, ce circuit intégré comprend en outre des moyens pour désactiver la temporisation à la suite d'une exécution normale d'une séquence de traitements prédéterminée.

Avantageusement, chaque circuit de temporisation comprend en outre des moyens pour détecter la présence de la tension d'alimentation, et des moyens pour autoriser l'activation ou l'inactivation de la temporisation lorsque la tension d'alimentation est détectée présente pendant une durée prédéterminée.

Selon une autre particularité de l'invention, ce circuit intégré comprend plusieurs circuits de temporisation, chaque circuit de temporisation étant associé à un calcul effectué par le circuit intégré, le circuit intégré comprenant des moyens pour, avant chaque calcul, déterminer l'état de la temporisation associée au calcul, activer la temporisation associée si celle-ci n'est pas active et se bloquer si la temporisation associée est active.

De préférence, chaque circuit de temporisation comprend un condensateur associé à :

- un circuit de décharge conçu de manière à ce que le condensateur se décharge lentement lorsque le circuit est hors tension,
- un circuit de détection de la charge du condensateur,
- des moyens de commande de la charge du condensateur, et
- des moyens de commande de la décharge du condensateur.

Avantageusement, les moyens de commande de la décharge du condensateur sont conçus pour décharger le condensateur plus rapidement que lorsque le circuit est hors tension.

Selon encore une autre particularité de l'invention, ce circuit intégré comprend un transistor MOS présentant des courants de fuite très faibles, qui est associé au condensateur de manière à ce que celui-ci se décharge uniquement par ces courants de fuite, lorsque le circuit intégré est hors tension.

De préférence, il comprend également un circuit de test commandé par une commande de test, pour diminuer la durée de la temporisation.

Ces objets, caractéristiques et avantages ainsi que d'autres de la présente invention seront exposés plus en détail dans la description suivante d'un mode de réalisation préféré de l'invention, faite à titre non limitatif en relation avec les figures jointes parmi lesquelles :

- la figure 1 représente schématiquement un circuit intégré selon l'invention, en liaison avec un terminal ;
- la figure 2 montre en détail un exemple de dispositif de protection selon l'invention, équipant le circuit intégré représenté sur la figure 1 ;
- la figure 2a est un schéma détaillé d'un élément de circuit du dispositif représenté sur la figure 2 ;
- les figures 3a à 3e représentent des courbes en fonction du temps de signaux électriques illustrant le fonctionnement des circuits représentés sur les figures 2 et 2a.
- les figures 4a à 4d représentent d'autres courbes en fonction du temps de signaux électriques illustrant le fonctionnement des circuits représentés sur les figures 2 et 2a, lorsque ces circuits sont mis successivement hors tension, puis sous tension ;
- les figures 5a à 5f sont des courbes en fonction du temps de signaux électriques illustrant le fonctionnement général du circuit représenté sur la figure 2 ;
- les figures 6a à 6d représentent des courbes en fonction du temps de signaux électriques illustrant le fonctionnement général du circuit représenté sur la figure 2, en cas de remise sous tension du circuit à la suite de la détection d'un fonctionnement anormal ;
- les figures 7a à 7d représentent des courbes en fonction du temps de signaux électriques illustrant le fonctionnement général d'une variante du circuit intégré selon l'invention ;

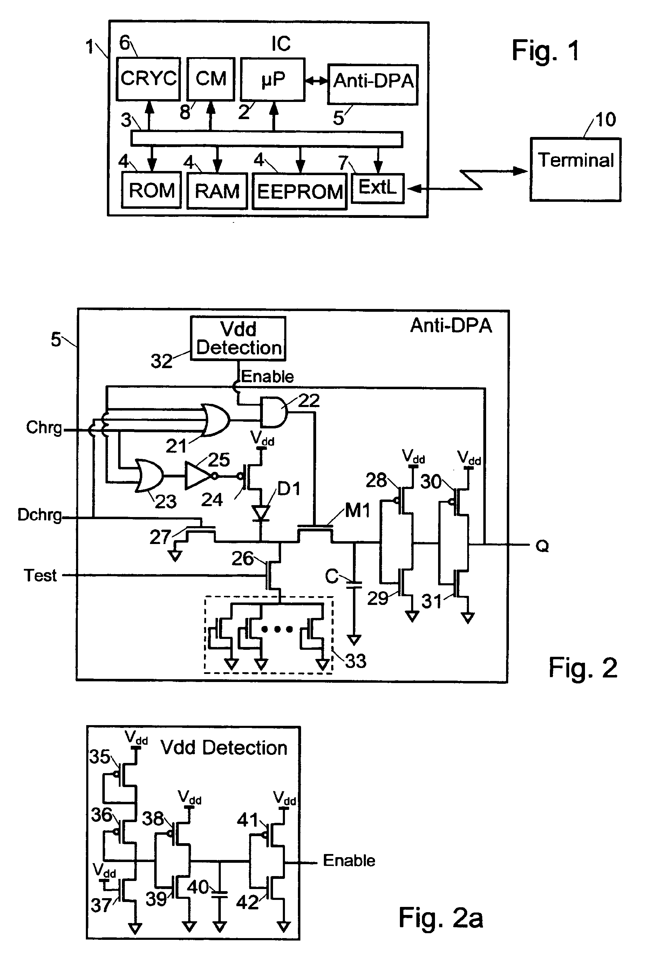

La figure 1 représente schématiquement l'architecture classique d'un circuit intégré 1 pour carte à puce. Ce circuit intégré 1 comprend une unité centrale de traitement 2, par exemple de type microprocesseur ou microcontrôleur, une unité de liaison 7 pour pouvoir communiquer avec ou sans contact avec un terminal externe 10, un circuit de cryptographie 6 et des mémoires 4, à savoir une mémoire morte ROM dans laquelle est stocké le système d'exploitation de l'unité centrale 2, une mémoire vive RAM pour stocker des données temporaires, et une mémoire programmable et effaçable, par exemple du type EEPROM, pour stocker un ou plusieurs programmes applicatifs. L'unité centrale 2, les mémoires 4, le circuit de cryptographie 6 et l'unité de liaison 7 sont interconnectés par un bus de données commun 3.

Une clé secrète utilisée par le circuit de cryptographie 6 est stockée dans une zone protégée de la mémoire ROM ou EEPROM.

Le circuit intégré peut également comprendre un circuit de contre-mesures 8 conçu pour brouiller une analyse de type DPA.

Selon l'invention, le circuit intégré 1 comprend également un circuit de temporisation 5 pour résister plus efficacement à une attaque de type DPA.

Sur la figure 2, ce circuit 5 comprend un circuit de temporisation, lequel comporte un transistor nMOS M1 conçu avantageusement de manière à présenter un courant de fuite drain-source très faible, c'est-à-dire un périmètre et une surface de drain minimum. Le drain de ce transistor est relié à la masse par l'intermédiaire d'un autre transistor nMOS 27 dont la grille est reliée à une entrée de commande de décharge Dchrg. Le drain du transistor M1 est également relié par l'intermédiaire d'une diode D1 montée en inverse au drain d'un transistor pMOS 24 dont la source est reliée à la source de tension $V_{dd}$. La grille du transistor 24 est connectée à la sortie d'un inverseur 25 dont l'entrée est connectée à la sortie d'une porte OU 23. Cette porte OU 23 présente une première entrée reliée à l'entrée de commande de chargement Chrg du circuit 5, et une seconde entrée reliée à la sortie Q du circuit 5. De cette manière, si la sortie Q ou la commande de charge Chrg est au niveau logique 1, la source du transistor est placée au niveau logique 1. Inversement, si Q et Chrg sont au niveau logique 0, le drain du transistor M1 est isolé par la diode D1 qui est alors bloquée. Cette diode est de préférence une diode de type caisson, de manière à être isolée du substrat (c'est-à-dire de la masse) sur lequel est formé le transistor M1, pour réduire les courants de fuite.

Par ailleurs, la source du transistor M1 est reliée d'une part à la masse par l'intermédiaire d'un condensateur C, et d'autre part à la sortie Q du circuit 5 par l'intermédiaire de deux étages inverseurs montés en série permettant de transformer la tension aux bornes du condensateur C en un signal logique. D'une manière classique, chaque étage inverseur comprend un transistor pMOS 28, 30 et un transistor nMOS 29, 31, montés en série entre la source de tension $V_{dd}$ et la masse. Les transistors 28 à 31 sont réalisés de manière à ce qu'une très faible tension aux bornes du condensateur permette d'obtenir un niveau logique 1 en sortie Q.

En outre, la grille du transistor M1 est connectée à la sortie d'une porte ET 22 dont les entrées sont respectivement connectées à un circuit 32 de détection de la tension d'alimentation $V_{dd}$ et à la sortie d'une porte OU 21. La porte OU 21 comprend trois voies d'entrée, à savoir une première voie connectée à la sortie Q, une seconde voie reliée à l'entrée Chrg de commande de chargement, et une troisième voie reliée à la commande de déchargement Dchrg.

La figure 2a montre en détail le circuit 32 de détection de la tension d'alimentation $V_{dd}$. Ce circuit comprend deux transistors pMOS 35, 36 montés en diode (grille connectée au drain), ces deux transistors étant montés en série entre la source de tension $V_{dd}$ et le drain d'un transistor nMOS 37 dont la grille est connectée à la source de tension $V_{dd}$ et la source est connectée à la masse, afin de jouer le rôle de résistance. Le point de jonction entre les transistors 36 et 37 est connecté à un premier étage inverseur comprenant un transistor pMOS 38 dont la source est au potentiel $V_{dd}$ et un transistor nMOS 39 dont la source est à la masse, ce point de jonction étant connecté aux grilles des deux transistors 38 et 39. Le point de jonction entre les drains des transistors 38 et 39 est connecté à un condensateur 40 dont l'autre borne est à la masse, et à un second étage inverseur comprenant un transistor pMOS 41 dont la source est au potentiel $V_{dd}$, et un transistor nMOS 42 dont la source est à la masse, le point de jonction des drains des deux transistors 41, 42 fournissant le signal Enable de sortie du circuit 32. En fait, l'ensemble constitué du condensateur 40 et du dernier étage inverseur avec les transistors 41 et 42 fonctionne comme une ligne à retard.

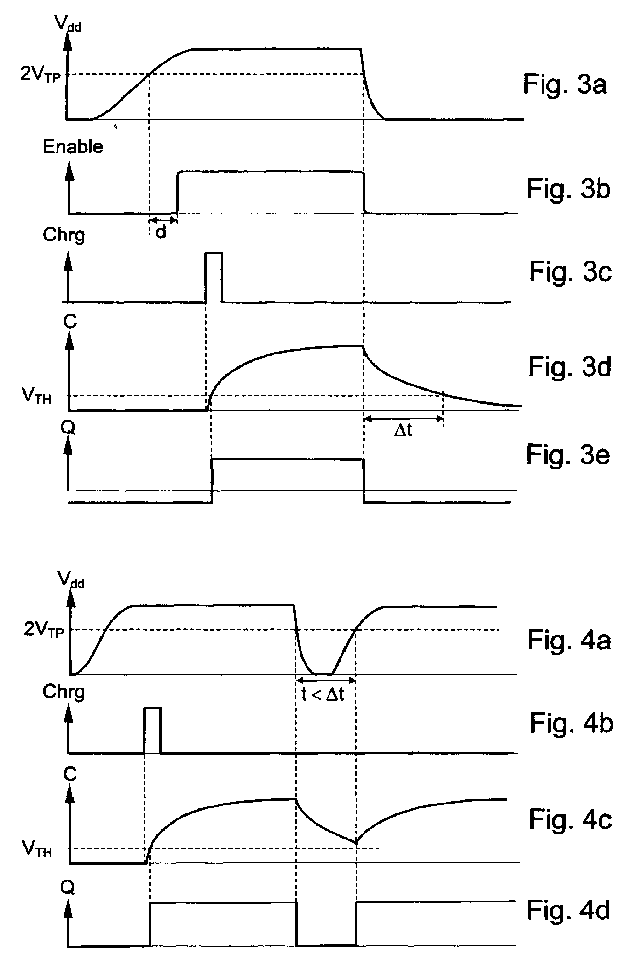

Le fonctionnement du circuit 5 est maintenant expliqué plus en détail en référence aux figures 3 et 4 donnant en fonction du temps la forme de différents signaux du circuit intégré 1.

Comme représenté sur les figures 3a à 3e, lorsque la tension d'alimentation $V_{dd}$ du circuit atteint la valeur $2V_{TP}$, $V_{TP}$ étant la tension de déblocage de chaque transistor 35, 36, le signal Enable passe de l'état bas à l'état haut au bout d'un certain délai d correspondant au temps de charge du condensateur 40 (figures 3a et 3b). Inversement, lorsque la tension $V_{dd}$ redescend en dessous de $2V_{TP}$, les transistors 35 et 36 se bloquent, faisant passer le signal Enable à l'état bas.

Pour commander la charge du condensateur C, l'unité de traitement 2 envoie une impulsion sur l'entrée de charge Chrg du circuit 5 (courbe de la figure 3c), le signal Enable étant à l'état haut. Il en résulte que la sortie de la porte OU 21 passe à l'état haut, ainsi que la sortie de la porte ET 22. Une tension est alors appliquée à la grille du transistor M1. De même, la sortie de la porte OU 23 passe à l'état haut, ce qui rend passant le transistor 24. La tension d'alimentation $V_{dd}$ du circuit est donc appliquée au drain du transistor M1 qui est alors passant, le transistor 27 étant bloqué (commande de décharge Dchrg à 0), isolant de la masse le drain du transistor M1. Il en résulte que le condensateur C se charge comme le montre la courbe de la figure 3d. Dès que la tension aux bornes du condensateur C devient supérieure à la tension de grille $V_{TH}$ de déblocage du transistor 29, le transistor 28 étant bloqué, le transistor 30 se débloque, plaçant la sortie Q au niveau logique 1 (courbe de la figure 3e) qui prend alors le relais de l'impulsion de charge pour maintenir passant le transistor M1. L'impulsion de commande de charge est donc choisie suffisamment large pour que la tension aux bornes du condensateur C atteigne au moins la valeur $V_{TH}$.

Inversement, si l'alimentation du circuit est coupée, le signal Enable passe au niveau bas, et la sortie de la porte ET 22 passe au niveau bas, ce qui bloque le transistor M1. Le condensateur C n'est donc plus sous tension et se décharge au travers du drain du transistor M1 (courant de fuite de la diode drain-substrat du transistor). Quand le circuit n'est plus alimenté, la sortie Q suit la tension d'alimentation $V_{dd}$ et donc tombe à 0. Tant que le temps $\Delta t$ correspondant à la constante de temps du circuit de décharge du condensateur ne s'est pas écoulé, la tension aux bornes du condensateur C reste supérieure à la tension de seuil $V_{TH}$. Par conséquent, comme représenté sur les figures 4a à 4d, toute remise sous tension du circuit avant que le temps $\Delta t$ ne se soit écoulé entraîne la mise sous tension des transistors 28 et 30, et donc la remontée de la sortie Q et une recharge automatique du condensateur C.

Dans le circuit 5, la constante de temps $\Delta t$ est le temps pendant lequel le circuit intégré 1 doit être mis hors tension pour que le condensateur C soit déchargé. La valeur de $\Delta t$ peut être obtenue par la formule suivante :

$$\Delta t = \frac{C \Delta V}{i} \qquad\qquad (1)$$

C étant la capacité du condensateur C, $\Delta V$ la variation de tension aux bornes du condensateur pendant le temps $\Delta t$, et i le courant de décharge.

Si l'alimentation $V_{dd}$ du circuit intégré est coupée, le condensateur C se décharge lentement à cause des courants de fuite très faibles qui apparaissent au travers du transistor M1. Par conséquent, même si la capacité du condensateur C est très faible, de l'ordre de quelques pF, la tension aux bornes du condensateur reste supérieure au seuil de basculement des étages inverseurs pendant la durée $\Delta t$.

Dans un composant MOS, C peut valoir 10 pF, $\Delta V$ 2 V et I 10 pA. Dans ces conditions, la constante de temps $\Delta t$ vaut 2 s. Typiquement, avec la technologie MOS, la constante de temps peut atteindre 5 s.

Pour augmenter la constante de temps $\Delta t$, plusieurs condensateurs peuvent être avantageusement placés en parallèle.

Si pendant que le condensateur C est chargé, l'unité de traitement 2 envoie une impulsion sur l'entrée de décharge Dchrg, le transistor 27 devient passant, ce qui place le drain du transistor M1 à la masse et donc le condensateur C se décharge alors d'une manière quasiment instantanée, les deux transistors M1 et 27 présentant à l'état passant une faible résistance.

Pendant un très cours instant, on peut remarquer que la source de tension $V_{dd}$ est placée directement à la masse par l'intermédiaire du transistor 27, de la diode D1 et du transistor 24. Ce conflit électrique est réglé en surdimensionnant le transistor 27 et en rendant le transistor 24 résistif (petite taille). En fait, ce conflit persiste le temps que la capacité C se décharge et fasse commuter la sortie Q.

Dès que la tension aux bornes du transistor C repasse en dessous de $V_{TH}$, le transistor 28 devient passant, tandis que le transistor 29 se bloque. Le transistor 30 se bloque alors à son tour, tandis que le transistor 31 se débloque, plaçant à la masse la sortie Q qui passe ainsi au niveau logique 0.

La largeur de l'impulsion de commande de décharge Dchrg doit également être plus grande que le temps de décharge du condensateur C au travers des transistors M1 et 27, jusqu'à la valeur $V_{TH}$. Il est à noter que la commande de décharge est appliquée à la porte OU 21 pour garantir que le condensateur C se décharge complètement. Sans cette disposition, la décharge du condensateur pourrait être stoppée dès que la tension de celui-ci repasse en dessous de la tension $V_{TH}$, moment à partir duquel le signal Q repasse au niveau bas, ce qui bloquerait la porte 21 et donc le transistor M1.

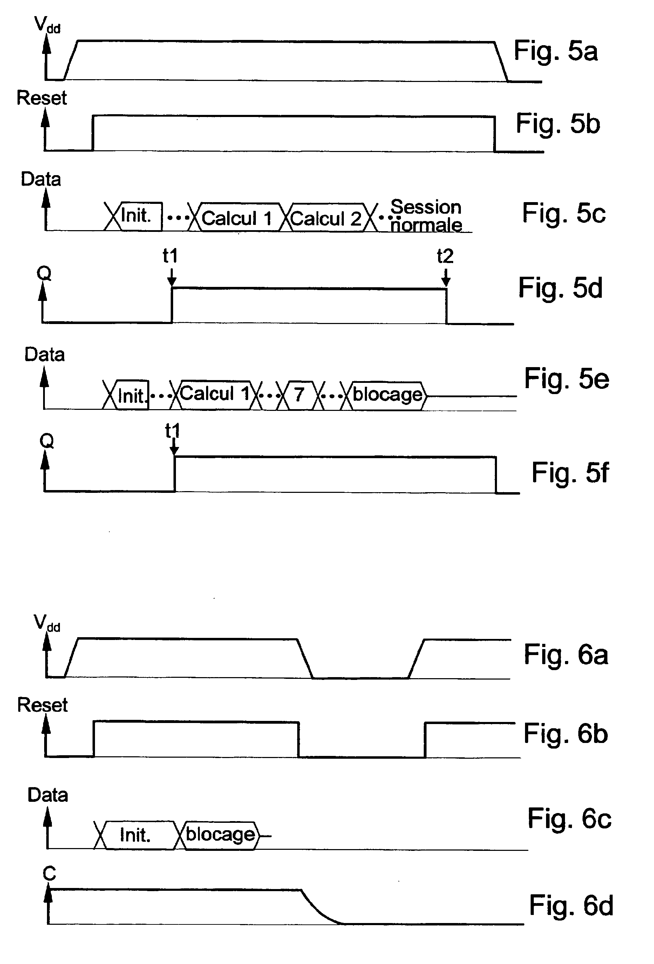

La figure 5a représente l'évolution de la tension $V_{dd}$ durant une transaction établie avec le circuit intégré. Peu après la mise sous tension du circuit intégré, le signal reset sur la figure 5b passe du niveau logique 0 au niveau logique 1, ce qui déclenche un traitement d'initialisation par l'unité de traitement 2, puis une série de n calculs d'authentification, comme on peut le voir sur la figure 5c qui représente l'activité de l'unité centrale 2. A la fin de ces n calculs, s'ils conduisent à une authentification du terminal 10, l'unité centrale passe en session normale pour exécuter la transaction demandée par le terminal.

En fonctionnement normal, la sortie Q (courbe de la figure 5d) est au niveau bas à la mise sous tension du circuit. A la fin de la procédure d'initialisation, le circuit 5 est commandé à l'instant t1 par l'unité de traitement 2 qui envoie une impulsion sur l'entrée Chrg, de manière à déclencher la charge du condensateur C, et donc à faire passer la sortie Q au niveau haut, le signal Enable étant au niveau haut. Dès que la tension aux bornes du condensateur a atteint la valeur $V_{TH}$, la sortie Q passe au niveau haut, ce qui maintient ensuite la tension de grille et de source du transistor M1 au niveau haut. Le condensateur C reste donc chargé et le signal Q est maintenu au niveau haut.

Si les calculs d'authentification (figure 5c) conduisent à l'authentification du terminal, l'unité centrale 2 commande la décharge du condensateur C en envoyant une impulsion sur la commande de décharge Dchrg, ce qui fait repasser la sortie Q au niveau bas à l'instant t2.

Au contraire, si au cours des calculs d'authentification, l'unité centrale 2 détecte un fonctionnement anormal révélant une tentative de piratage, elle ne commande pas le déchargement du condensateur et se bloque, par exemple dans une boucle d'attente (figures 5e, 5f).

Si ensuite on tente de réinitialiser le circuit 1 en coupant son alimentation pendant une courte durée inférieure au temps de décharge du condensateur C, l'unité centrale 2 qui exécute la procédure d'initialisation, détecte que le signal Q est encore au niveau haut, indiquant que le condensateur C n'est pas complètement déchargé et se bloque (figure 6c).

De cette manière, pour réinitialiser complètement le circuit 1, il est nécessaire d'attendre au moins pendant $\Delta t$ pour pouvoir redémarrer le composant dans un état normal.

Au cours d'une analyse DPA du circuit intégré, il est donc nécessaire d'attendre que le condensateur C soit déchargé entre chaque séquence d'acquisition d'échantillons de mesure de courant, ce qui allonge considérablement la durée d'une telle analyse.

Pour supprimer totalement la possibilité d'une telle analyse, on peut prévoir qu'avant chaque blocage, l'unité centrale 2 incrémente un compteur de blocage mémorisé dans la mémoire EEPROM et se bloque définitivement lorsque la valeur du compteur atteint ou dépasse un certain seuil prédéfini. Le blocage définitif du circuit intégré peut par exemple consister à effacer la clé secrète mémorisée dans la mémoire EEPROM, ou d'une manière plus générale, à effacer toutes les données confidentielles stockées dans cette mémoire, ou encore tout le contenu de celle-ci.

On peut prévoir par ailleurs de connecter le drain du transistor M1 à un transistor nMOS 26 dont la grille est relié à une entrée de commande de test et dont la source est reliée à un circuit 33 comprenant une pluralité de transistors nMOS en parallèle entre la source du transistor 26 et la masse, ces transistors étant montés en mode bloqué (grille reliée à la masse). Ces transistors sont de même taille que le transistor M1, de sorte que le courant de fuite qui décharge la capacité C est n fois plus important que celui de M1, n étant le nombre de transistors du circuit 33. Ce circuit 33 permet donc de rabaisser la constante de temps $\Delta t = RC$ du circuit de temporisation à une valeur compatible à la réalisation de tests sur le circuit intégré 1 (R correspondant à la résistance du circuit 33 et C étant la capacité du condensateur C).

Bien entendu, la commande de test doit être rendue suffisamment inaccessible pour ne pas être activée par des pirates éventuels.

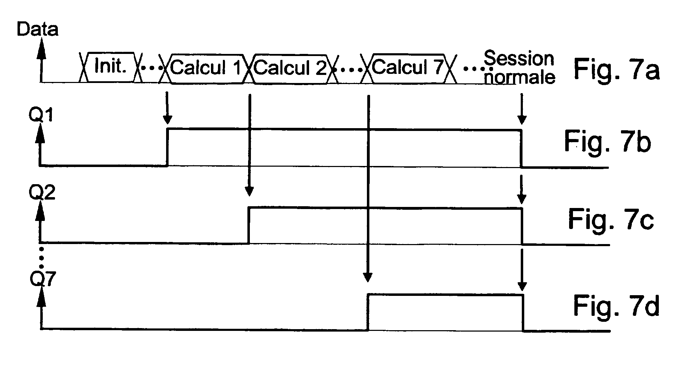

Selon une variante de l'invention, on peut prévoir d'inclure dans le circuit intégré 1 plusieurs circuits de temporisation 5, par exemple à raison d'un circuit par séquence de calcul d'authentification. Comme représenté sur les figures 7a à 7d, au lieu de commander la charge du condensateur C durant la séquence d'initialisation effectuée par l'unité de traitement 2, chaque séquence de calcul comprend une commande de lecture de la valeur du signal Qi de sortie du circuit de temporisation 5 qui lui est associé, puis, si ce signal est au niveau bas, une commande de charge du condensateur de ce circuit, de manière à faire passer le signal Qi au niveau haut comme représenté sur les figures 7b à 7d.

De cette manière, si la même séquence de calcul est demandée deux fois durant une même phase d'authentification (sans mise hors tension du circuit 1 pendant une durée suffisante), l'unité de traitement 2 le détecte en lisant la valeur du signal Qi correspondant à la séquence de calcul, et se bloque.

### Revendications

**1.** Procédé pour la protection d'un circuit intégré contre le piratage, **caractérisé en ce qu'**il comprend les étapes exécutées par le circuit intégré (1) avant une séquence prédéterminée de traitements, consistant successivement à :

- détecter l'état d'au moins une temporisation (5),
- commander le déclenchement de la temporisation (5) se celle-ci n'est pas active, et
- se bloquer si la temporisation est active.

**2.** Procédé selon la revendication 1, **caractérisé en ce qu'**il comprend en outre une étape exécutée par le circuit intégré (1) si la séquence de traitements prédéterminés a été exécutée normalement, consistant à désactiver la temporisation (5).

**3.** Procédé selon la revendication 1 ou 2, **caractérisé en ce qu'**il comprend en outre une étape exécutée par le circuit intégré (1) si la temporisation (5) est détectée active, consistant à modifier la valeur d'un compteur dans une zone protégée d'une mémoire non volatile (EEPROM), comparer la valeur de ce compteur à un seuil prédéfini, et effectuer un traitement de protection de données confidentielles stockées dans des mémoires du circuit intégré si la valeur du compteur atteint le seuil prédéfini.

**4.** Procédé selon la revendication 3, **caractérisé en ce que** ledit traitement de protection consiste à effacer les données confidentielles des mémoires (4) du circuit intégré.

**5.** Procédé selon la revendication 3, **caractérisé en ce que** ledit traitement de protection consiste à effacer un code secret stocké dans une mémoire (4) du circuit intégré (1).

**6.** Procédé selon la revendication 3, **caractérisé en ce que** ledit traitement de protection consiste à effacer toutes mémoires (4) du circuit intégré (1).

**7.** Procédé selon l'une quelconque des revendications 1 à 4, **caractérisé en ce que,** avant d'exécuter un calcul d'une séquence d'un nombre prédéfini de calculs, le circuit intégré (1) détecte l'état d'une temporisation (5) respective, chaque calcul étant associé respectivement à une temporisation (5), il commande l'activation de la temporisation associée si celle-ci n'est pas active, et il se bloque si la temporisation associée est active.

**8.** Circuit intégré protégé contre le piratage, **caractérisé en ce qu'**il comprend au moins un circuit de temporisation (5) comprenant des moyens d'activation (Charg) d'une temporisation conçue pour rester à l'état actif tant que le circuit (5) est sous tension et pendant une durée prédéterminée si le circuit est hors tension, des moyens d'inactivation (Dchrg) de la temporisation, et des moyens (Q) pour détecter l'état actif ou inactif de la temporisation ; le circuit intégré (1) comprenant en outre des moyens pour lire l'état de la temporisation, et pour se bloquer à des instants prédéfinis si la temporisation est à l'état actif.

**9.** Circuit intégré selon la revendication 8, **caractérisé en ce qu'**il comprend en outre des moyens pour désactiver la temporisation à la suite d'une exécution normale d'une séquence de traitements prédéterminée.

**10.** Circuit intégré selon la revendication 8 ou 9, **caractérisé en ce que** chaque circuit de temporisation (5) comprend en outre des moyens (32) pour détecter la présence de la tension d'alimentation, et des moyens (22) pour autoriser l'activation ou l'inactivation de la temporisation lorsque la tension d'alimentation est détectée présente pendant une durée prédéterminée.

**11.** Circuit intégré selon l'une quelconque des revendications 8 à 10, **caractérisé en ce qu'**il comprend plusieurs circuits de temporisation (5), chaque circuit de temporisation étant associé à un calcul effectué par le circuit intégré (1), le circuit intégré comprenant des moyens pour, avant chaque calcul, déterminer l'état de la temporisation associée au calcul, activer la temporisation associée si celle-ci n'est pas active et se bloquer si la temporisation associée est active.

**12.** Circuit intégré selon l'une quelconque des revendications 8 à 11, **caractérisé en ce que** chaque circuit de temporisation (5) comprend un condensateur (C) associé à :

- un circuit de décharge (M1) conçu de manière à ce que le condensateur (C) se décharge lentement lorsque le circuit est hors tension,
- un circuit (28 à 30) de détection de la charge du condensateur (C),
- des moyens de commande de la charge du condensateur (C), et
- des moyens de commande de la décharge du condensateur.

**13.** Circuit intégré selon la revendication 12, **caractérisé en ce que** les moyens de commande (27) de la décharge du condensateur (C) sont conçus pour décharger le condensateur plus rapidement que lorsque le circuit est hors tension.

**14.** Circuit intégré selon l'une quelconque des revendications 8 à 13, **caractérisé en ce qu'**il comprend un transistor MOS (M1) présentant des courants de fuite très faibles, qui est associé au condensateur (C) de manière à ce que celui-ci se décharge uniquement par ces courants de fuite, lorsque le circuit intégré (1) est hors tension.

**15.** Circuit intégré selon l'une quelconque des revendications 8 à 14, **caractérisé en ce qu'**il comprend un circuit de test (33) commandé par une commande de test, pour diminuer la durée de la temporisation.

7

**EP 1 220 101 B1**

**Claims**

1. A method for protecting an integrated circuit against hacking, **characterized in that** it comprises the successive steps executed by the integrated circuit (1) before a predetermined processing sequence, of:

   - detecting the status of at least one time delay (5),
   - controlling the triggering of the time delay (5) if the latter is not active, and
   - switching off if the time delay is active.

2. Method according to claim 1, **characterized in that** it further comprises a step executed by the integrated circuit (1) if the predetermined processing sequence has been executed normally, of deactivating the time delay (5).

3. Method according to claim 1 or 2, **characterized in that** it further comprises a step executed by the integrated circuit (1) if the time delay (5) is detected active, of changing the value of a counter in a protected zone of a non-volatile memory (EEPROM), comparing the value of this counter with a predefined threshold, and performing processing for protecting confidential data stored in memories of the integrated circuit if the value of the counter reaches the predefined threshold.

4. Method according to claim 3, **characterized in that** said protection processing involves erasing the confidential data from the memories (4) of the integrated circuit.

5. Method according to claim 3, **characterized in that** said protection processing involves erasing a secret code stored in a memory (4) of the integrated circuit (1).

6. Method according to claim 3, **characterized in that** said protection processing involves erasing all memories (4) of the integrated circuit (1).

7. Method according to any one of claims 1 to 4, **characterized in that**, before executing a calculation of a sequence of a predefined number of calculations, the integrated circuit (1) detects the status of a respective time delay (5), each calculation being respectively associated with a time delay (5), it controls the activation of the associated time delay if the latter is not active, and it switches off if the associated time delay is active.

8. An integrated circuit protected against hacking, **characterized in that** it comprises at least one time delay circuit (5) comprising means for activating (Charg) a time delay designed to remain in the active status while the circuit (5) is switched on and for a predetermined period of time if the circuit is switched off, means for deactivating (Dchrg) the time delay, and means (Q) for detecting the active or deactivated status of the time delay; the integrated circuit (1) further comprising means for reading the status of the time delay, and for switching off at predefined instants if the time delay is in the active status.

9. Integrated circuit according to claim 8, **characterized in that** it further comprises means for deactivating the time delay following a normal execution of a predetermined processing sequence.

10. Integrated circuit according to claim 8 or 9, **characterized in that** each time delay circuit (5) further comprises means (32) for detecting the presence of the supply voltage, and means (22) for authorizing the activation or the deactivation of the time delay when the supply voltage is detected as being present for a predetermined period of time.

11. Integrated circuit according to any one of claims 8 to 10, **characterized in that** it comprises several time delay circuits (5), each time delay circuit being associated with a calculation performed by the integrated circuit (1), the integrated circuit comprising means for, before each calculation, determining the status of the time delay associated with the calculation, activating the associated time delay if the latter is not active and switching off if the associated time delay is active.

12. Integrated circuit according to any one of claims 8 to 11, **characterized in that** each time delay circuit (5) comprises a capacitor (C) associated with:

    - a discharge circuit (M1) designed so that the capacitor (C) slowly discharges when the circuit is switched off,
    - a circuit (28 to 30) for detecting the charge of the capacitor (C),
    - means for controlling the charge of the capacitor (C), and

8

- means for controlling the discharge of the capacitor.

13. Integrated circuit according to claim 12, **characterized in that** the control means (27) for controlling the discharge of the capacitor (C) are designed for discharging the capacitor more rapidly than when the circuit is switched off.

14. Integrated circuit according to any one of claims 8 to 13, **characterized in that** it comprises a MOS transistor (M1) having very low leakage currents, which is associated with the capacitor (C) so that the latter only discharges by these leakage currents, when the integrated circuit (1) is switched off.

15. Integrated circuit according to any one of claims 8 to 14, **characterized in that** it comprises a test circuit (33) controlled by a test command, to decrease the duration of the time delay.


**Patentansprüche**

1. Verfahren zum Schutz gegen unbefugter Benutzung eines integrierten Schaltkreises, **dadurch gekennzeichnet, dass** es die von dem integrierten Schaltkreis (1) vor einer vorbestimmten Sequenz von Behandlungen durchgeführten Schritte aufweist, die darin bestehen, nacheinander:

- den Zustand mindestens einer Verzögerung (5) zu erfassen,
- das Auslösen der Verzögerung (5) zu veranlassen, wenn diese nicht aktiv ist, und
- sich zu blockieren, wenn die Verzögerung aktiv ist.

2. Verfahren nach Anspruch 1, **dadurch gekennzeichnet, dass** es ferner einen Schritt aufweist, der von dem integrierten Schaltkreis (1) ausgeführt wird, wenn die Sequenz vorbestimmter Behandlungen normal ausgeführt wurde, der im Deaktivieren der Verzögerung (5) besteht.

3. Verfahren nach Anspruch 1 oder 2, **dadurch gekennzeichnet, dass** es ferner einen Schritt aufweist, der von dem integrierten Schaltkreis (1) ausgeführt wird, wenn die Verzögerung (5) als aktiv erfasst wird, der darin besteht, den Wert eines Zählers in einer geschützten Zone eines nicht flüchtigen Speichers (EEPROM) zu ändern, den Wert dieses Zählers mit einem vorbestimmten Schwellenwert zu vergleichen und eine Verarbeitung zum Schutz vertraulicher Daten auszuführen, die in Speichern des integrierten Schaltkreises gespeichert sind, wenn der Wert des Zählers einen vorbestimmten Schwellenwert erreicht.

4. Verfahren nach Anspruch 3, **dadurch gekennzeichnet, dass** die Schutzverarbeitung darin besteht, die vertraulichen Daten der Speicher (4) des integrierten Schaltkreises zu löschen.

5. Verfahren nach Anspruch 3, **dadurch gekennzeichnet, dass** die Schutzverarbeitung darin besteht, einen Geheimcode in einem Speicher (4) des integrierten Schaltkreises (1) zu löschen.

6. Verfahren nach Anspruch 3, **dadurch gekennzeichnet, dass** die Schutzverarbeitung darin besteht, alle Speicher (4) des integrierten Schaltkreises (1) zu löschen.

7. Verfahren nach einem der vorhergehenden Ansprüche 1 bis 4, **dadurch gekennzeichnet, dass** der integrierte Schaltkreis (1) vor dem Ausführen einer Berechnung einer Sequenz mit einer vorbestimmten Anzahl von Berechnungen den Zustand einer jeweiligen Verzögerung (5) erfasst, wobei jede Berechnung jeweils mit einer Verzögerung (5) verbunden ist, dass er das Aktivieren der dazugehörenden Verzögerung befiehlt, wenn diese nicht aktiv ist, und sich blockiert, wenn die dazugehörende Verzögerung aktiv ist.

8. Integrierter Schaltkreis, der gegen ungefugte Benutzung geschützt ist, **dadurch gekennzeichnet, dass** er mindestens einen Verzögerungsschaltkreis (5) aufweist, der Mittel zum Aktivieren (Charg) einer Verzögerung aufweist, die konzipiert sind, um im aktiven Zustand zu bleiben, solange an dem Schaltkreis (5) Spannung anliegt, und während einer vorbestimmten Dauer, wenn der Schaltkreis spannungsfrei ist, Mittel zum Deaktivieren (Dcharg) der Verzögerung sowie Mittel (Q) zum Erfassen des aktiven oder inaktiven Zustands der Verzögerung, wobei der integrierte Schaltkreis (1) ferner Mittel aufweist, um den Zustand der Verzögerung zu lesen und sich in vorbestimmten Augenblicken zu blockieren, wenn die Verzögerung im aktiven Zustand ist.

9. Integrierter Schaltkreis nach Anspruch 8, **dadurch gekennzeichnet, dass** er ferner Mittel zum Deaktivieren der Verzögerung im Anschluss an ein normales Ausführen einer vorbestimmten Sequenz von Verarbeitungen aufweist.

10. Integrierter Schaltkreis nach Anspruch 8 oder 9, **dadurch gekennzeichnet, dass** jeder Verzögerungsschaltkreis (5) ferner Mittel (32) aufweist, um die Gegenwart der Versorgungsspannung zu erfassen, sowie Mittel (22), um das Aktivieren oder das Deaktivieren der Verzögerung zu gestatten, wenn die Versorgungsspannung während einer vorbestimmten Dauer als gegenwärtig erfasst wird.

11. Integrierter Schaltkreis nach einem der Ansprüche 8 bis 10, **dadurch gekennzeichnet, dass** er mehrere Verzögerungsschaltkreise (5) aufweist, wobei jeder Verzögerungsschaltkreis mit einer Berechnung verbunden ist, die von dem integrierten Schaltkreis (1) ausgeführt wird, wobei der integrierte Schaltkreis Mittel aufweist, um vor jeder Berechnung den Zustand der zu der Berechnung gehörenden Verzögerung zu bestimmen, die dazugehörende Verzögerung zu aktivieren, wenn diese nicht aktiv ist, und sich zu blockieren, wenn die dazugehörende Verzögerung aktiv ist.

12. Integrierter Schaltkreis nach einem der Ansprüche 8 bis 11, **dadurch gekennzeichnet, dass** jeder Verzögerungsschaltkreis (5) einen Kondensator (C) aufweist, der verbunden ist mit:

- einem Entladeschaltkreis (M1), der so konzipiert ist, dass sich der Kondensator (C) langsam entlädt, wenn der Schaltkreis spannungsfrei ist,
- einem Schaltkreis (28 bis 30) zum Erfassen der Ladung des Kondensators (C),
- Mitteln zum Steuern des Ladens des Kondensators (C) und
- Mitteln zum Steuern des Entladens des Kondensators.

13. Integrierter Schaltkreis nach Anspruch 12, **dadurch gekennzeichnet, dass** die Steuermittel (27) der Entladung des Kondensators (C) konzipiert sind, um den Kondensator schneller zu entladen als wenn der Schaltkreis spannungsfrei ist.

14. Integrierter Schaltkreis nach einem der Ansprüche 8 bis 13, **dadurch gekennzeichnet, dass** er einen MOS-Transistor (M1) aufweist, der sehr geringe Leckströme aufweist, der mit dem Kondensator (C) so verbunden ist, dass sich dieser nur durch diese Leckströme entlädt, wenn der integrierte Schaltkreis (1) spannungsfrei ist.

15. Integrierter Schaltkreis nach einem der Ansprüche 8 bis 14, **dadurch gekennzeichnet, dass** er einen Testschaltkreis (33) aufweist, der von einem Testbefehl gesteuert wird, um die Dauer der Verzögerung zu verringern.

Fig. 1

Fig. 2

Fig. 2a

$V_{dd}$

$2V_{TP}$

Fig. 3a

Enable

Fig. 3b

Chrg

d

Fig. 3c

C

$V_{TH}$

$\Delta t$

Fig. 3d

Q

Fig. 3e

$V_{dd}$

$2V_{TP}$

$t < \Delta t$

Fig. 4a

Chrg

Fig. 4b

C

$V_{TH}$

Fig. 4c

Q

Fig. 4d

Fig. 5a

$V_{dd}$

Fig. 5b

Reset

Fig. 5c

Data

X Init. X ··· X Calcul 1 X Calcul 2 X ·· Session normale

Fig. 5d

Q

t1    t2

Fig. 5e

Data

X Init. X ··· X Calcul 1 X ·· X 7 X ·· X blocage X

Fig. 5f

Q

t1

Fig. 6a

$V_{dd}$

Fig. 6b

Reset

Fig. 6c

Data

X Init. X blocage X

Fig. 6d

C

Data

Init. ··· Calcul 1 Calcul 2 ··· Calcul 7 ··· Session normale    **Fig. 7a**

Q1

**Fig. 7b**

Q2

**Fig. 7c**

Q7

**Fig. 7d**